# EUROPÄISCHE PATENTSCHRIFT

(11) **EP 1 386 082 B1**
(45) Veröffentlichungstag und Bekanntmachung des Hinweises auf die Patenterteilung: **01.02.2006**
(21) Anmeldenummer: 02735222.8
(22) Anmeldetag: 04.04.2002
(51) Int. Cl.: F04D 29/66, F16L 55/04, F16L 27/12

(54) **VAKUUMLEITUNG**
VACUUM CONDUIT
CONDUITE A VIDE

(30) Priorität: 19.04.2001 DE 10119075
(43) Veröffentlichungstag der Anmeldung: 04.02.2004
(73) Patentinhaber: Leybold Vacuum GmbH, 50968 Köln (DE)
(72) Erfinder: BEYER, Christian, 50765 Köln (DE); HODAPP, Josef, 50935 Köln (DE); ENGLÄNDER, Heinrich, 52441 Linnich (DE)
(74) Vertreter: Selting, Günther
(86) Internationale Anmeldenummer: PCT/EP2002/003743
(87) Internationale Veröffentlichungsnummer: WO 2002/086325

(56) Entgegenhaltungen:
- DE-A- 10 001 509
- DE-A- 10 043 235
- US-A- 4 609 332
- US-A- 4 795 927
- US-A- 5 059 092
- PATENT ABSTRACTS OF JAPAN vol. 1999, no. 13, 30. November 1999 (1999-11-30) & JP 11 210455 A (CALSONIC CORP;NISSAN MOTOR CO LTD), 3. August 1999 (1999-08-03)
- PATENT ABSTRACTS OF JAPAN vol. 1998, no. 14, 31. Dezember 1998 (1998-12-31) & JP 10 252963 A (TOOFURE KK), 22. September 1998 (1998-09-22)

## Beschreibung

Die Erfindung bezieht sich auf eine Vakuumleitung mit einem Schwingungsdämpfer, die der Verbindung zweier Vakuumvorrichtungen dient.

Vakuumpumpen, insbesondere schnelllaufende Turbomolekularpumpen, erzeugen während ihres Betriebes unvermeidbare Schwingungen. Die Vakuumpumpe ist durch eine Vakuumleitung mit einer anderen Vakuumvorrichtung verbunden, beispielsweise mit einem empfindlichen Analysegerät, einem Elektronenmikroskop u.ä. Bei großer Schwingungs- und Erschütterungsempfindlichkeit der angeschossenen Vakuumvorrichtung weist die verbindende Vakuumleitung einen Schwingungsdämpfer auf, der die Übertragung der Schwingungen von der Vakuumpumpe auf die angeschlossene Vakuumvorrichtung weitgehend vermeidet. Derartige Schwingungsdämpfer weisen einen das Vakuumrohr bildenden faltenbalgartigen Federungskörper auf, der von einem Elastomer-Dämpfermantel umfasst ist, wie beispielsweise die nachveröffentlichte DE 100 01 509 A1 zeigt. Das Federungs- und Dämpfungsverhalten des Schwingungsdämpfers ist konstruktiv festgelegt und kann später nicht mehr ohne weiteres geändert werden. Eine Anpassung des Schwingungsdämpferverhaltens an die Schwingungsverhältnisse am Einbauort kann im montierten Zustand nicht mehr vorgenommen werden. Der Federungskörper und der Dämpfermantel weisen eine gewisse Steifigkeit auf, so dass eine Übertragung von Schwingungen und Körperschall durch den Federungskörper und den Dämpfermantel nicht völlig vermieden werden kann.

In JP-A-11210455 wird eine Abgasleitung für ein Kraftfahrzeug beschrieben, bei der ein axiales Federungselement vorgesehen ist, das von einander axial abstoßenden permanent erregten Ringmagneten gebildet wird.

In US-A-5,059,092 und US 4,795,927 werden schnelldrehende Turbomaschinen beschrieben, bei denen der Rotor durch aktiv geregelte Magnetlager gelagert ist.

Aufgabe der Erfindung ist es daher, eine Vakuumleitung mit verbessertem Schwingungsdämpfer zu schaffen.

Diese Aufgabe wird erfindungsgemäß mit den Merkmalen des Anspruchs 1 gelöst.

Gemäß der Erfindung ist der Schwingungsdämpfer ein aktiv geregeltes axiales Magnetlager. Das Magnetlager hat sowohl federnde als auch dämpfende Eigenschaften, so dass sowohl ein mechanisches Federelement als auch eine mechanische Dämpfungsvorrichtung entfallen können. Die mechanische Verbindung zwischen zwei Vakuumvorrichtungen kann daher in einer bevorzugten Ausführung auf einen dünnwandigen flexiblen Rohrabschnitt beschränkt werden, durch den Schwingungen zwischen den Vakuumvorrichtungen nur noch in geringem Maße übertragen werden können. Die Federungs- und Dämpfungs-Kenngrößen des aktiven Magnetlagers können auch im eingebauten Zustand jederzeit geändert werden, so dass die Abstimmung des Magnetlagers vor Ort im montierten Zustand jederzeit angepasst bzw. verändert werden kann. Dies erlaubt auch den Austausch und die Weiterverwendung des Magnetlager-Schwingungsdämpfers an einer anderen Vakuumpumpe. Durch die Ausbildung des Schwingungsdämpfers als aktiv geregeltes Magnetlager kann eine nahezu vollständige mechanische Entkopplung zweier Vakuumvorrichtungen voneinander realisiert werden.

Hierdurch wird die nahezu erschütterungsfreie Realisierung von Prozessen im Vakuum ermöglicht.

Gemäß einer bevorzugten Ausgestaltung weist das Magnetlager eine ein axiales Magnetfeld erzeugende Magnetspule und, axial gegenüberliegend, einen permanent axial magnetisierten Hauptmagneten auf, wobei eine Regelungsvorrichtung zum Steuern der Magnetspule vorgesehen ist. Durch Änderung der Flussrichtung des die Magnetspule durchfließenden Stromes kann auf den axial gegenüberliegenden Hauptmagneten eine anziehende oder abstoßende Kraft generiert werden. Die Regeleinrichtung steuert die Magnetspule derart, dass die anziehende Kraft des Hauptmagneten auf das Joch, welches die Magnetspule umgibt, in etwa der Gewichtskraft der Vakuumpumpe entspricht. Der Abstand zwischen der Magnetspule und dem Hauptmagneten bleibt stets ungefähr gleich, wobei gleichzeitig Schwingungen in möglichst geringem Maße übertragen werden. Hiermit wird auf einfache Weise ein geregeltes axiales Magnetlager realisiert, das sowohl federnde als auch dämpfende Eigenschaften aufweist und eine gute mechanische Entkopplung der durch die Vakuumleitung miteinander verbundenen Vakuumvorrichtungen gewährleistet. Dadurch, dass die Gewichtskraft durch anziehende Kraft des Hauptmagneten kompensiert wird, bleibt der Strom- und Leistungsbedarf des Magnetlagers gering.

Gemäß einer bevorzugten Ausgestaltung ist ein Axialabstandssensor zur Messung des axialen Abstandes der beiden axialen Enden des Rohrabschnittes vorgesehen, wobei der Axialabstandssensor mit der Regelungsvorrichtung verbunden ist und die Regelungsvorrichtung die Magnetspule in Abhängigkeit von dem gemessenen Axialabstand steuert.

Gemäß einer bevorzugten Ausgestaltung ist dem Hauptmagneten axial gegenüberliegend ein Jocheisen zur Bündelung des von der Magnetspule erzeugten Magnetfeldes vorgesehen. Durch die Bündelung des Magnetfeldes werden die Streuverluste möglichst gering gehalten, der Wirkungsgrad des Magnetlagers verbessert und die Genauigkeit der Regelung und damit die Güte der Entkopplung verbessert.

Gemäß einer bevorzugten Ausgestaltung ist magnetspulenseitig ein permanent axial magnetisierter Gegenmagnet vorgesehen, der mit dem Magnetfeld des Hauptmagneten zusammenwirkt. Der Gegenmagnet ist gegensinnig polarisiert und ungefähr axial zu dem Hauptmagneten angeordnet, so dass sich der Hauptmagnet und der Gegenmagnet gegenseitig abstoßen. Ferner wird der Anziehung zwischen dem Hauptmagneten und dem axial gegenüberliegenden Jocheisen entgegengewirkt. Das Größenverhältnis von Hauptmagnet zu Gegenmagnet wird so gewählt, dass die Gewichtskraft der für die Vakuumleitung vorgesehenen Vakuumpumpen von der resultierenden Kraft des Hauptmagneten auf das Joch der Magnetspule aufgebracht wird. Dadurch wird eine axiale Vorspannung der Dämpfungsvorrichtung vermieden. Ein entsprechender Vorspannungsausgleich durch die Magnetspule kann daher entfallen. Dies ermöglicht die Verwendung relativ kleiner Magnetspulen. Ferner wird auch die durch die Magnetspule erzeugte Wärme erheblich reduziert.

Gemäß einer bevorzugten Ausgestaltung ist magnetspulenseitig axial zwischen dem Hauptmagneten und der Magnetspule eine Wirbelstrom-Dämpfungsscheibe aus elektrisch leitendem Material angeordnet. Die Dämpfungsscheibe bewirkt eine Dämpfung radialer Bewegungen durch die bei radialen Bewegungen in der Dämpfungsscheibe induzierten Wirbelströme. Auf diese Weise wird eine wirkungsvolle radiale Dämpfung realisiert, die alternativ oder ergänzend zu einer aktiven Dämpfung von radialen Bewegungen und/oder Kippbewegungen vorgesehen werden kann.

Gemäß einer bevorzugten Ausgestaltung ist das Magnetlager ringförmig ausgebildet, wobei der Hauptmagnet, der Gegenmagnet, das Jocheisen und die Magnetspule kreisringartig um den Rohrabschnitt herum angeordnet sind. Durch die Anordnung des Magnetlagers radial außen des Rohrabschnittes und nicht axial an den Rohrabschnitt anschließend wird eine kurze Baulänge der Vakuumleitung mit Schwingungsdämpfer ermöglicht.

Vorzugsweise sind mehrere separat ansteuerbare Magnetspulen ringartig um den Rohrabschnitt zum Ausgleich von Kippmomenten angeordnet. Zur Ermittlung von Kippbewegungen sind vorzugsweise mehrere Axialabstandssensoren vorgesehen, die mit der Regelungsvorrichtung verbunden sind. Die Magnetspule und die Gegen- und Hauptmagneten liegen ungefähr in einer Querebene, wodurch die Baulänge der Dämpfungsvorrichtung klein gehalten wird.

Gemäß einer bevorzugten Ausgestaltung sind die Polflächen der einander gegenüberstehenden Magnetpole nicht in der Querebene liegend, sondern die Polflächen und der Luftspalt zwischen den Polflächen, also zwischen dem Jocheisen und dem Hauptmagneten, sind zur Querebene geneigt. Hierdurch wird die Fläche des magnetfelddurchsetzten Luftspaltes vergrößert, so dass die Verwendung größerer und stärkerer Haupt- bzw. Gegenmagnete ermöglicht wird. Ferner wird durch die Neigung des Luftspaltes eine radiale Magnetkraftkomponente erzeugt, so dass neben der axialen auch eine aktive radiale Dämpfung realisiert werden kann. Für eine entsprechende Regelung sind daher vorzugsweise mehrere Radialabstandssensoren zur Ermittlung von Radialbewegungen vorgesehen.

Vorzugsweise ist der Rohrabschnitt als Faltenbalg ausgebildet. Der Faltenbalg ist dabei möglichst elastisch ausgebildet, beispielsweise in Form eines dünnwandigen Metall-Faltenbalgs. Hierdurch wird sichergestellt, dass durch den Faltenbalg praktisch kein Körperschall oder andere Schwingungen zwischen zwei angeschlossenen Vakuumvorrichtungen übertragen werden. Der Faltenbalg dient ausschließlich der vakuumdichten Abdichtung und hat keine federnde oder dämpfende Wirkung mehr. Vorzugweise ist zur Begrenzung des Hubes des Faltenbalges bei größeren Drücken innerhalb des Faltenbalges parallel zu dem Rohrabschnitt ein Hubbegrenzer vorgesehen, der die axiale Ausdehnung des Faltenbalges begrenzt.

Im folgenden werden unter Bezugnahme auf die Figuren zwei Ausführungsbeispiele der Erfindung näher erläutert.

Es zeigen:
- Fig. 1: eine Vakuumleitung mit Schwingungsdämpfer einer ersten Ausführungsform im Längsschnitt,
- Fig. 2: eine vergrößerte Darstellung des Schwingungsdämpfers der Vakuumleitung der Fig. 1,
- Fig. 3: drei Magnetspulen mit zugehörigen Jocheisen des Schwingungsdämpfers der Fig. 1 und
- Fig. 4: eine vergrößerte Darstellung einer zweiten Ausführungsform eines Schwingungsdämpfers mit geneigten Polflächen und Luftspalt.

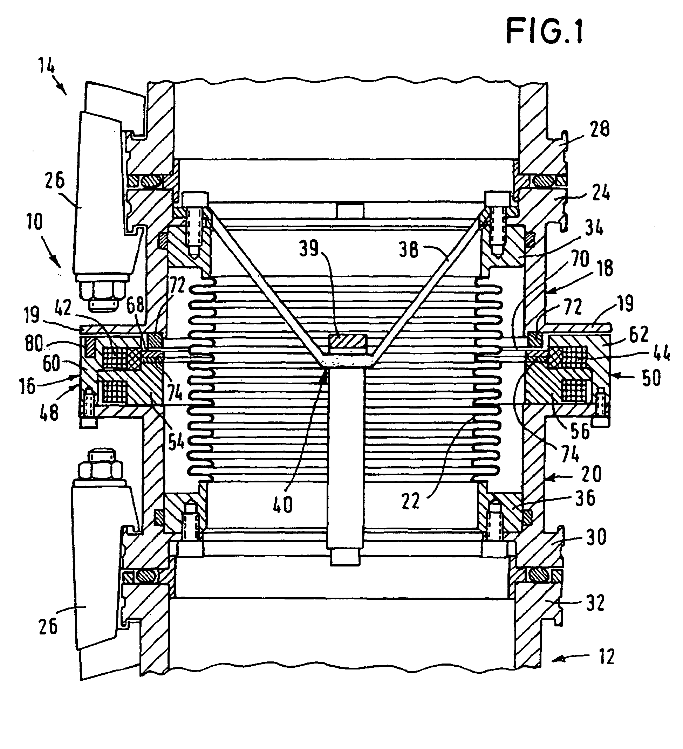

In Fig. 1 ist ein erstes Ausführungsbeispiel einer Vakuumleitung 10 zwischen einer als Turbomolekular-Vakuumpumpe 12 ausgebildeten ersten Vakuumvorrichtung und einer als Rezipienten 14 ausgebildeten zweiten Vakuumvorrichtung 14 dargestellt. Die nicht vollständig dargestellte Vakuumpumpe 12 hängt über die Vakuumleitung 10 an dem nicht vollständig dargestellten Rezipienten 14.

Der Rezipient 14 ist eine Messkammer eines Analysegerätes, eines Elektronenmikroskops oder eines anderen erschütterungsempfindlichen Gerätes. Die Auflösung und Messgenauigkeit derartig empfindlicher Geräte wird durch Erschütterungen und Schwingungen erheblich verschlechtert.

Die Turbomolekular-Vakuumpumpe 12 wird mit Drehzahlen bis zu 80.000 U/min. betrieben, wobei schon kleine Unwuchten des Pumpenrotörs zu störenden Schwingungen führen. Um die Übertragung dieser Schwingungen von der Vakuumpumpe 12 auf den Rezipienten 14 zu vermeiden, wird der Rezipient 14 durch einen der Vakuumleitung 10 zugeordneten Schwingungsdämpfer 16 mechanisch von der Vakuumpumpe 12 entkoppelt.

Die Vakuumleitung 10 wird im wesentlichen gebildet von einem oberen Gehäuseteil 18, von einem unteren Gehäuseteil 20, dem Schwingungsdämpfer 16 zwischen den beiden Gehäuseteilen 18, 20 und einem von einem gas- und vakuumdichten Metall-Faltenbalg 22 gebildeten flexiblen Rohrabschnitt. Das obere Gehäuseteil 18 weist an seinem oberen Ende einen Befestigungsflansch 24 auf. Der Befestigungsflansch 24 des oberen Gehäuseteiles 18 ist mit mehreren Klammerschrauben 26 fest und vakuumdicht mit einem Rezipientenflansch 28 verbunden. Ebenso ist ein Befestigungsflansch 30 des unteren Gehäuseteiles 20 mit einem Pumpenflansch 32 der Vakuumpumpe 12 mit mehreren Klammerschrauben 26 vakuumdicht verbunden.

Innerhalb des von den beiden Gehäuseteilen 18, 20 umschlossenen Raumes ist der Faltenbalg 22 angeordnet und ist mit seinen beiden axialen Balgflanschen 34, 36 fest und vakuumdicht mit den beiden Befestigungsflanschen 24, 30 verschraubt. Die Steifigkeit des Faltenbalges 22 ist so niedrig wie möglich gewählt, um die Übertragung von Schwingungen über Körperschall durch den Faltenbalg 22 so gering wie möglich zu halten. Zwei mit ihren geschlossenen Enden ineinander greifende ungefähr V-förmige Stahlbleche 38, 39 bilden einen Hubbegrenzer 40, durch den der Hub, d.h. die axiale Streckung der Vakuumleitung 10 bzw. des Balges 22 begrenzt wird, beispielsweise bei relativ hohem Druck innerhalb des Balges 22.

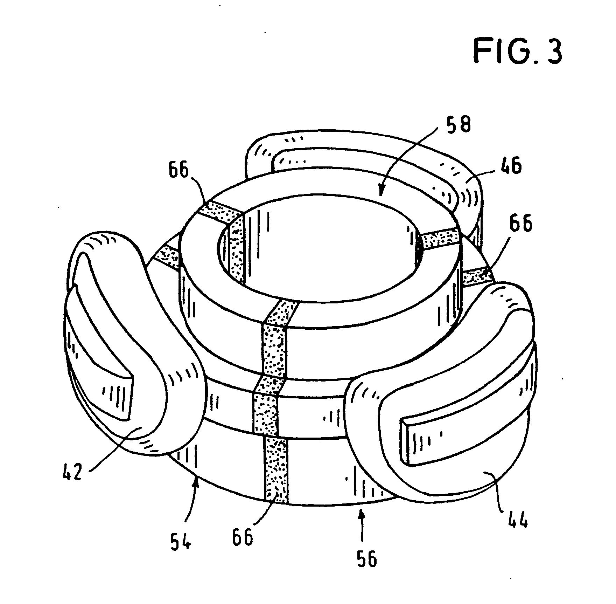

Der Schwingungsdämpfer 16 ist ein aktiv geregeltes axiales Magnetlager und weist drei jeweils ein torusförmiges Magnetfeld erzeugende Magnetspulen 42, 44, 46 auf, die jeweils von einem ferromagnetischen Jocheisen 48, 50 durchdrungen und umgeben sind. Jedes der drei Jocheisen 48, 50 besteht im wesentlichen aus Jocheisen-Innenabschnitten 54, 56, 58, wie in Fig. 3 dargestellt, und im Querschnitt ungefähr L-förmigen Jocheisen-Außenabschnitten 60, 62. Zwischen den sich in einem Segment von ungefähr 120° erstreckenden Jocheisen-Innenabschnitten 54, 56, 58 ist jeweils eine Trennscheibe 66 aus nicht-ferromagnetischem Material vorgesehen, die die Jocheisen-Innenabschnitte 54, 56, 58 magnetisch voneinander trennt. Die Jocheisen 48, 50 bilden jeweils einen im Querschnitt rechteckigen Rahmen, der an einer radial inneren Ecke unterbrochen, also offen ist und dort einen Luftspalt 68, 70 bildet. Das Jocheisen 48, 50 besteht aus einem Eisen-Verbund-Werkstoff mit einem ungefähr 5%igen Kunststoffanteil, wodurch die Induktion von Wirbelströmen gering gehalten und die Regelung des Magnetlagers 16 beschleunigt wird. Für das Jocheisen sind auch magnetisierbare Edelstähle verwendbar. Durch den Luftspalt 68, 70 von dem einen Ende des Jocheisens getrennt gegenüberliegend, ist an dem oberen Gehäuseteil 18 als Hauptmagnet 72 ein axial magnetisierter ringförmiger Permanentmagnet befestigt. Das von den Magnetspulen 42, 44, 46 erzeugte Magnetfeld wirkt auf den Hauptmagneten 72 in axialer Richtung anziehend oder abstoßend, je nach Polarisierung des von der Magnetspule 42, 44, 46 erzeugten Magnetfeldes, also je nach Stromrichtung in der Magnetspule 42, 44, 46.

An der axialen Stirnseite des einen offenen Jocheisenendes ist als Gegenmagnet 74 ein axial magnetisierter ringförmiger Permanentmagnet befestigt, der zu dem Hauptmagneten 72 gegensinnig polarisiert ist, so dass sich der Hauptmagnet 72 und der Gegenmagnet 74 abstoßen. Auf diese Weise werden die zwischen dem Hauptmagneten 72 und den Jocheisen 48, 50 erzeugten magnetischen Anziehungskräfte durch ungefähr entsprechend große Abstoßungskräfte zwischen dem Hauptmagneten 72 und dem Gegenmagneten 74 kompensiert. Durch Vorsehen des Gegenmagneten 74 kann die Regelung der axialen Lage um eine annähernd vorspannungsfreie axiale Mittellage herum erfolgen. Zur Regelung der axialen Mittellage sind daher nur relativ kleine Regelkräfte erforderlich. Dies ermöglicht kleine Magnetspulen 42, 44, 46. Ferner wird durch die relativ geringe erforderliche Regelleistung auch die Wärmeerzeugung begrenzt.

Axial vor dem Gegenmagneten 74 ist eine kreisrunde Wirbelstrom-Dämpfungsscheibe 76 aus einem elektrisch gut leitendem Material befestigt, beispielsweise aus Kupfer. Die Dämpfungsscheibe 76 liegt also axial zwischen dem Hauptmagneten 72 und dem Gegenmagneten 74, wobei der Luftspalt 68, 70 zwischen der Dämpfungsscheibe 76 und dem Hauptmagneten 72 angeordnet ist. Bei radialen Bewegungen und Vibrationen der Vakuumpumpe 12 werden durch den Hauptmagneten 72 in der Dämpfungsscheibe 76 elektrische Wirbelströme induziert. Dadurch wird die mechanische Bewegungsenergie der Vakuumpumpe 12 induktiv auf die Dämpfungsscheibe 76 übertragen und dort in Wärme umgesetzt. Auf diese Weise werden auch radiale Bewegungen und Vibrationen der Vakuumpumpe 12 gedämpft und dennoch nur in geringem Maße auf den Rezipienten 14 übertragen.

Im Bereich des Jocheisens 48, 50 sind dem Ringflansch 19 des oberen Gehäuseteiles 18 durch den Luftspalt 68, 70 getrennt gegenüberliegend drei axiale Abstandssensoren 80 angeordnet, durch die der axiale Abstand des Jocheisens 60, 62 des unteren Gehäuseteiles 20 von dem Ringflansch 19 des oberen Gehäuseteiles 18 gemessen wird. Der Abstandssensor 80 ist ein induktiver Sensor, der ein Abstandssignal an eine nicht dargestellte Steuervorrichtung liefert. Durch das Vorsehen von insgesamt drei gleichmäßig über den Umfang verteilten Abstandssensoren 80 werden auch Kippbewegungen zwischen der Vakuumpumpe 12 und dem Rezipienten 14 erfasst und können durch entsprechendes Steuern der Magnetspulen 42, 44, 46 durch die Steuervorrichtung ausgeglichen bzw. ihre Übertragung von der Vakuumpumpe 12 auf den Rezipienten 14 vermieden werden.

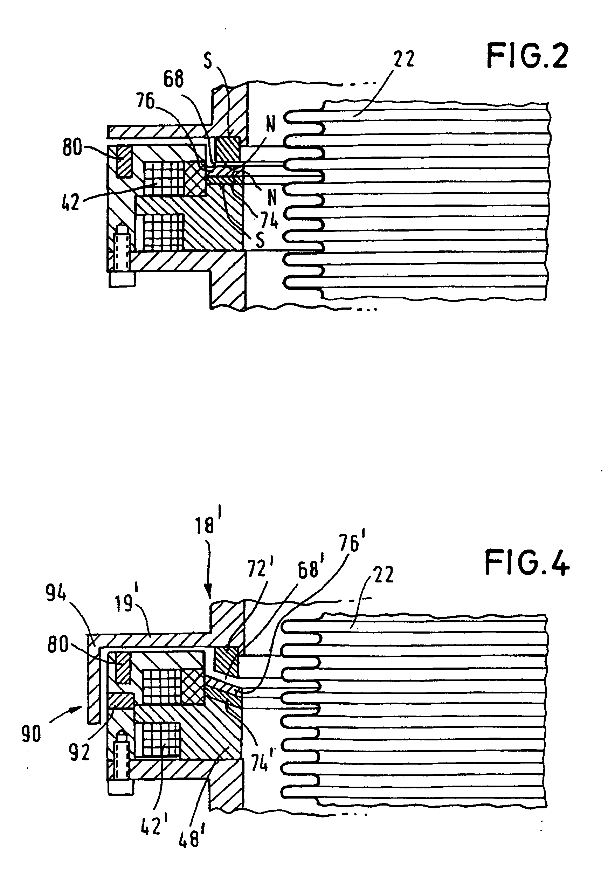

Bei der in Fig. 4 dargestellten zweiten Ausführungsform einer Dämpfungsvorrichtung 90 liegen der Hauptmagnet 72', der Gegenmagnet 74', die Dämpfungsscheibe 76' und damit auch der Luftspalt 68' nicht scheibenförmig in einer Querebene, sondern sind in einem Winkel von ungefähr 15° zu der Querebene geneigt, so dass der Winkel α des Luftspaltes 68' zur Längsachse nicht 90°, wie bei der in den Fig. 1-3 dargestellten ersten Ausführungsform, sondern ungefähr 75° beträgt.. Ergänzend zu den drei axialen Abstandssensoren 80 sind drei radiale Abstandssensoren 92 gleichmäßig über den Umfang verteilt angeordnet. Die ebenfalls als Induktivsensoren ausgebildeten radialen Abstandssensoren 92 ermitteln den radialen Abstand gegenüber einem zylinderförmigen Mantel 94, der sich am Außenumfang des Ringflansches 19' des oberen Gehäuseteiles 18' anschließt. Durch die Neigung des Luftspaltes 68' lassen sich die Permanentmagnete 72', 74' sowie die Querschnittsfläche der Jocheisen 48' vergrößern, so dass sich auch die generierten und generierbaren Magnetkräfte hierdurch erhöhen lassen. Durch die Neigung des Luftspaltes 68' werden die senkrecht zur Luftspaltebene übertragenen Magnetkräfte ferner in eine axiale als auch in eine (kleinere) radiale Komponente aufgeteilt. Durch eine geeignete Regelung und Steuerung der Magnetspulen 42' lässt sich sowohl die axiale Lage als auch die radiale Lage des Rezipienten 14 im Verhältnis zu der Vakuumpumpe 12 regeln. Auf diese Weise lässt sich nicht nur die Übertragung axialer Schwingungen und Erschütterungen, sondern auch die Übertragung radialer Schwingungen und Erschütterungen von der Vakuumpumpe 12 auf den Rezipienten 14 auf ein Minimum begrenzen.

In der nicht dargestellten Steuervorrichtung sind Regel-Algorithmen und/oder Tabellen hinterlegt, die für jede Schwingungssituation eine Ansteuerung der Magnetspulen 42-46; 42' vorsieht, durch die eine Übertragung der Vakuumpumpen-Schwingungen auf den Rezipienten weitgehend vermieden wird.

In einer einfachen, nicht dargestellten Ausführungsform kann auch nur eine einzige konzentrische Magnetspule vorgesehen sein, die sich in einem geschlossenen Kreis über den gesamten Umfang erstreckt. Mit einer derartigen Anordnung lässt sich jedoch nur eine Dämpfung in axialer Richtung realisieren, nicht jedoch eine Dämpfung von Kippmomenten oder radialen Bewegungen. Grundsätzlich lässt sich ein Schwingungsdämpfer auch ohne Vorsehen eines Gegenmagneten oder einer Dämpfungsscheibe realisieren.

Die Permanentmagnete, nämlich Haupt- und Gegenmagnete, können auch radial außerhalb der Magnetspule angeordnet werden. Diese Anordnung erlaubt insgesamt größere Permanentmagnete, die größere Magnetkräfte erzeugen.

Durch Verwendung aktiv geregelter elektromagnetischer Schwingungsdämpfer wird die Schwingungsübertragung von der Vakuumpumpe auf eine angeschlossene Vakuumvorrichtung minimiert. Dadurch wird auch der Einsatz von Vakuumpumpen geringerer Wuchtgüte ermöglicht bzw. die Schwingungsfreiheit der angeschlossenen Vakuumvorrichtung verbessert. Dies erlaubt wiederum bei empfindlichen Analysegeräten, die beispielsweise in Verbindung mit einem angeschlossenen Rezipienten stehen, höhere Auflösungen bzw. genauere Messergebnisse.

## Patentansprüche

1. Vakuumleitung zum Verbinden zweier Vakuumvorrichtungen (12, 14), mit
einem vakuumdichten flexiblen Rohrabschnitt (22) und
einem Schwingungsdämpfer (16) axial parallel zu dem flexiblen Rohrabschnitt (22),
**dadurch gekennzeichnet,**
**dass** der Schwingungsdämpfer (16) ein aktiv geregeltes axiales Magnetlager ist.

2. Vakuumleitung nach Anspruch 1, **dadurch gekennzeichnet, dass** das Magnetlager eine ein axiales Magnetfeld erzeugende Magnetspule (42) und axial gegenüberliegend einen permanent axial magnetisierten Hauptmagneten (72) aufweist, wobei eine Regelungsvorrichtung zum Steuern der Magnetspule (42) vorgesehen ist.

3. Vakuumleitung nach Anspruch 1 oder 2, **dadurch gekennzeichnet, dass** der Schwingungsdämpfer (16) einen Axialabstandssensor (80) zur Messung des axialen Abstandes der beiden axialen Enden des Rohrabschnittes (22) aufweist, wobei der Axialabstandssensor (80) mit der Regelungsvorrichtung verbunden ist und die Regelungsvorrichtung die Magnetspule (42) in Abhängigkeit von dem gemessenen Axialabstand steuert.

4. Vakuumleitung nach Anspruch 2 oder 3, **dadurch gekennzeichnet, dass** dem Hauptmagneten (72) axial gegenüberliegend ein Jocheisen (48) zur Bündelung des von der Magnetspule (42) erzeugten Magnetfeldes vorgesehen ist.

5. Vakuumleitung nach einem der Ansprüche 2-4, **dadurch gekennzeichnet, dass** magnetspulenseitig ein permanent axial magnetisierter Gegenmagnet (74) vorgesehen ist, der mit dem Magnetfeld des Hauptmagneten (72) zusammenwirkt.

6. Vakuumleitung nach einem der Ansprüche 2-4, **dadurch gekennzeichnet, dass** magnetspulenseitig axial zwischen dem Hauptmagneten (72) und der Magnetspule eine Wirbelstrom-Dämpfungsscheibe (76) aus elektrisch leitendem Material angeordnet ist.

7. Vakuumleitung nach einem der Ansprüche 2-6, **dadurch gekennzeichnet, dass** das Magnetlager ringförmig ausgebildet ist, und der Hauptmagnet (72), der Gegenmagnet (74), die Jocheisen (48, 50) und die Magnetspulen (42, 44, 46) kreisringartig um den Rohrabschnitt (22) herum angeordnet sind.

8. Vakuumleitung nach einem der Ansprüche 2-7, **dadurch gekennzeichnet, dass** mehrere separat ansteuerbare Magnetspulen (42, 44, 46) ringartig um den Rohrabschnitt (22) zum Ausgleich von Kippmomenten angeordnet sind.

9. Vakuumleitung nach einem der Ansprüche 2-8, **dadurch gekennzeichnet, dass** mehrere Axialabstandssensoren (80) zur Ermittlung von Kippbewegungen und mehrere Radialabstandssensoren (92) zur Ermittlung von Radialbewegungen vorgesehen sind, wobei die Sensoren (80, 92) mit der Regelungsvorrichtung verbunden sind.

10. Vakuumleitung nach einem der Ansprüche 2-9, **dadurch gekennzeichnet, dass** die Magnetspule (42, 44, 46) radial außen oder innen des Haupt- und Gegenmagneten (72, 74) angeordnet ist.

11. Vakuumleitung nach einem der Ansprüche 2-10, **dadurch gekennzeichnet, dass** der Luftspalt (68, 70) zwischen dem Jocheisen (48, 50) und dem Hauptmagneten (72) zur Querebene geneigt ist.

12. Vakuumleitung nach einem der Ansprüche 1-11, **dadurch gekennzeichnet, dass** mehrere Radialabstandssensoren (92) vorgesehen sind.

13. Vakuumleitung nach einem der Ansprüche 1-12, **dadurch gekennzeichnet, dass** der Rohrabschnitt (22) als Faltenbalg ausgebildet ist.

14. Vakuumleitung nach Anspruch 12 oder 13, **dadurch gekennzeichnet, dass** axial parallel zu dem Rohrabschnitt (22) ein Hubbegrenzer (40) vorgesehen ist.

## Claims

1. Vacuum line for connecting two vacuum devices (12,14), comprising
a vacuum-tight flexible tube section (22) and
a vibration damper (16) axially parallel to the flexible tube section (22),
**characterized in**
**that** the vibration damper (16) is an actively controlled axial magnetic bearing.

2. Vacuum line according to claim 1, **characterized in that** the magnetic bearing comprises a magnet coil (42) generating an axial magnetic field and axially opposite thereto, a permanently axially magnetized main magnet (72), a control device for controlling the magnet coil (42) being provided.

3. Vacuum line according to claim 1 or 2, **characterized in that** the vibration damper (16) comprises an axial distance sensor (80) for measuring the axial distance of the two axial ends of the tube section (22), the axial distance sensor (80) being connected with the control device and the control device controlling the magnet coil (42) in dependence on the measured axial distance.

4. Vacuum line according to claim 2 or 3, **characterized in that** a yoke iron (48) for concentrating the magnetic field generated by the magnet coil (42) is provided axially opposite to the main magnet (72).

5. Vacuum line according to one of claims 2-4, **characterized in that** a permanently axially magnetized counter magnet (74) cooperating with the magnetic field of the main magnet (72) is provided on the part of the magnet coil.

6. Vacuum line according to one of claims 2-4, **characterized in that** an eddy current dampening disc (76) of electrically conducting material is arranged axially between the main magnet (72) and the magnet coil on the part of the magnet coil.

7. Vacuum line according to one of claims 2-6, **characterized in that** the magnetic bearing has an annular configuration, and the main magnet (72), the counter magnet (74), the yoke irons (48,50), and the magnet coils (42,44,46) are arranged about the tube section (22) in the way of an annular circle.

8. Vacuum line according to one of claims 2-7, **characterized in that** several magnet coils (42,44,46) adapted to be driven separately are arranged about the tube section (22) in a ring-like manner to compensate for tilting moments.

9. Vacuum line according to one of claims 2-8, **characterized in that** several axial distance sensors (80) for detecting tilting movements and several radial distance sensors (92) for detecting radial movements are provided, the sensors (80,92) being connected with the control device.

10. Vacuum line according to one of claims 2-9, **characterized in that** the magnet coil (42,44,46) is arranged radially outside or inside the main and counter magnet (72,74).

11. Vacuum line according to one of claims 2-10, **characterized in that** the air gap (68,70) between the yoke iron (48,50) and the main magnet (72) is inclined to the transverse plane.

12. Vacuum line according to one of claims 1-11, **characterized in that** several radial distance sensors (92) are provided.

13. Vacuum line according to one of claims 1-12, **characterized in that** the tube section (22) is configured as a bellows.

14. Vacuum line according to claim 12 or 13, **characterized in that** a stroke limiter (40) is provided axially parallel to the tube section (22).

## Revendications

1. Conduite à vide pour relier deux dispositifs à vide (12, 14), comprenant
une section tubulaire (22) souple étanche au vide et
un amortisseur de vibrations (16) parallèle axialement à la section tubulaire (22) souple,
**caractérisée en ce que**
l'amortisseur de vibrations (16) est un palier magnétique axial régulé activement.

2. Conduite à vide selon la revendication 1, **caractérisée en ce que** le palier magnétique présente une bobine électromagnétique (42) générant un champ magnétique axial et axialement opposé un aimant principal (72) aimanté en permanence axialement, un dispositif de régulation étant prévu pour commander la bobine électromagnétique (42).

3. Conduite à vide selon la revendication 1 ou 2, **caractérisée en ce que** l'amortisseur de vibrations (16) présente un capteur d'écartement axial (80) pour mesurer l'écartement axial des deux extrémités axiales de la section tubulaire (22), le capteur d'écartement axial (80) étant relié au dispositif de régulation qui commande la bobine électromagnétique (42) en fonction de l'écartement axial mesuré.

4. Conduite à vide selon la revendication 2 ou 3, **caractérisée en ce qu'**un fer de culasse (48) est prévu en étant axialement opposé à l'aimant principal (72) afin de focaliser le champ magnétique généré par la bobine électromagnétique (42).

5. Conduite à vide selon l'une quelconque des revendications 2 à 4, **caractérisée en ce qu'**un aimant antagoniste (74) aimanté axialement en permanence et coopérant avec le champ magnétique de l'aimant principal (72) est prévu côté bobine électromagnétique.

6. Conduite à vide selon l'une quelconque des revendications 2 à 4, **caractérisée en ce qu'**un disque amortisseur de courant de Foucault (76) en matériau de conduction électrique est disposé côté bobine électromagnétique axialement entre l'aimant principal (72) et la bobine électromagnétique.

7. Conduite à vide selon l'une quelconque des revendications 2 à 6, **caractérisée en ce que** le palier magnétique est conçu sous forme annulaire et **en ce que** l'aimant principal (72), l'aimant antagoniste (74), le fer de culasse (48, 50) et les bobines électromagnétiques (42, 44, 46) sont disposés en cercle autour de la section tubulaire (22).

8. Conduite à vide selon l'une quelconque des revendications 2 à 7, **caractérisée en ce que** plusieurs bobines électromagnétiques (42, 44, 46) pouvant être pilotées séparément sont disposées en forme de cercle autour de la section tubulaire (22) pour compenser les couples de basculement.

9. Conduite à vide selon l'une quelconque des revendications 2 à 8, **caractérisée en ce que** plusieurs capteurs d'écartement axial (80) sont prévus pour déterminer des mouvements de basculement et plusieurs capteurs d'écartement radial (92) le sont pour déterminer des mouvements radiaux, les capteurs (80, 92) étant reliés au dispositif de régulation.

10. Conduite à vide selon l'une quelconque des revendications 2 à 9, **caractérisée en ce que** la bobine électromagnétique (42, 44, 46) est disposée radialement à l'extérieur ou à l'intérieur des aimants principal et antagoniste (72, 74).

11. Conduite à vide selon l'une quelconque des revendications 2 à 10, **caractérisée en ce que** l'entrefer (68, 70) entre le fer de culasse (48, 50) et l'aimant principal (72) est incliné par rapport au plan transversal.

12. Conduite à vide selon l'une quelconque des revendications 1 à 11, **caractérisée en ce que** plusieurs capteurs d'écartement radial (92) sont prévus.

13. Conduite à vide selon l'une quelconque des revendications 1 à 12, **caractérisée en ce que** la section tubulaire (22) est conçue sous forme de soufflet.

14. Conduite à vide selon la revendication 12 ou 13, **caractérisée en ce qu'**un limiteur de course (40) est prévu axialement parallèlement à la section tubulaire (22).
